Europäisches Patentamt

(19) European Patent Office

Office européen des brevets

(11) Publication number: **0 271 989**
**B1**

(12) **EUROPEAN PATENT SPECIFICATION**

(45) Date of publication of the patent specification:
22.11.90

(21) Application number: **87309899.0**

(22) Date of filing: **09.11.87**

(51) Int. Cl.⁵: **F25B 9/02, C09K 5/04**

(54) **Refrigerant.**

(30) Priority: **16.12.86 US 943445**

(43) Date of publication of application:
**22.06.88 Bulletin 88/25**

(45) Publication of the grant of the patent:
**22.11.90 Bulletin 90/47**

(84) Designated Contracting States:
**AT BE CH DE ES FR GB GR IT LI LU NL SE**

(56) References cited:
**FR-A- 2 140 837**
**US-A- 3 933 003**
**US-A- 4 198 313**

**Hausen/Linde, "Tieftemperaturtechnnik, p.1 of preface**

(73) Proprietor: **Systron Donner Corporation, 2750 Systron Drive, Concord California 94518(US)**

(72) Inventor: **Vogt, Clarence Lyndon, 635 E. Walnut, Burbank California 91501(US)**
Inventor: **Wan, Lawrence Arthur, 22350 Carbon Mesa Road, Malibu California 90265(US)**
Inventor: **Tecimer, Fikret Mehmet, 15205 Mulholland Drive, Los Angeles California 90077(US)**

(74) Representative: **Marsh, Robin Geoffrey et al, Thorn EMI Patents Limited The Quadrangle Westmount Centre Uxbridge Road, Hayes Middlesex, UB4 0HB(GB)**

## Description

This invention generally relates to an improved refrigerant which is particularly useful in refrigerating systems involving the Joule-Thomson expansion of compressed refrigerants.

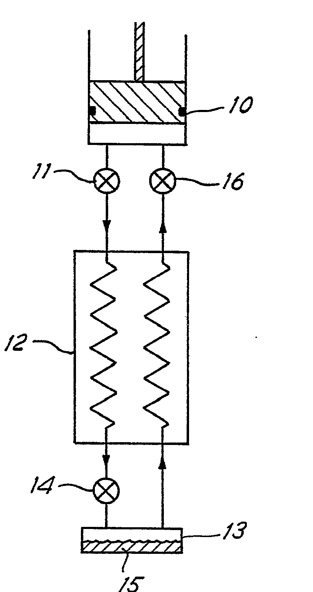

The use of nitrogen as the working fluid in a refrigeration system, particularly those based on Joule-Thomson expansion, is well documented in the literature. In these prior systems, nitrogen under pressure is directed through an expansion valve element, such as a porous plug or capillary wherein the gas adiabatically expands to provide the desired refrigeration. A simplified refrigeration cycle, frequently called the "Hampson cycle," is shown in FIG. 1. In this cycle, which utilizes Joule-Thomson expansion, high pressure gas such as nitrogen is compressed to a suitable pressure by compressor 10, directed through outlet valve 11 into heat exchanger 12 where the compressed gas is cooled by passing countercurrently with cooled vapors from reservoir 13. The compressed cooled fluid exits the heat exchanger 12 and is allowed to expand adiabatically through the expansion element 14 into reservoir 13 thereby reducing the temperature thereof. Depending upon the temperature and pressure involved, some gas may condense to the liquid state as indicated at 15. The low temperature vapor from reservoir 13 passes through the heat exchanger 12 to cool the incoming compressed refrigerant, as previously described, and is preferably recycled to the compressor 10 through inlet value 15. However, if desired, the cool vapor from the reservoir 13 or the heat exchanger 12 may be vented to the atmosphere. Temperatures as low as 77° K (−196°C) can be obtained with nitrogen by means of the above system. Even lower temperatures can be obtained by other gases.

Microminiature refrigerating systems have been developed to cool electronic devices, such as infrared sensors and communication equipment. These extremely small cooling devices can operate on essentially the same cycle as previously described. The expansion element is usually a properly sized capillary to provide the adiabatic expansion. Most of the microminiature refrigeration systems involve cryogenic temperatures and use nitrogen or argon or mixtures thereof as the working fluid.

However, one of the chronic problems with the aforementioned microminiature refrigeration systems is the presence of impurities in the refrigerant or working fluid which clog the expansion capillaries or other small passageways, such as those found in the heat exchanger, to thereby interfere with the refrigeration process. Morover, at the cryogenic temperatures, solutes in the refrigerant or working fluid can also precipitate or otherwise separate from the working fluid and clog such passageways or otherwise interfere with the passage of working fluid or refrigerant through the small conduits.

Other gases such as low molecular weight hydrocarbons have been suggested for use as working fluids in microminiature refrigeration systems, but these materials are for the most part highly inflammable and explosive in certain concentrations with air, and as a result, the use of these combustible refrigerant gases has been for the most part limited to experimentation. There have been indications given in the literature (see Dutch Application No. 7 106 470 or the corresponding FR-A 2 140 837 to Alfeev et al.) that mixtures of nitrogen and low molecular weight hydrocarbons, such as methane, ethane, and propane, provide substantial improvements in the refrigerating capacity over nitrogen alone at temperatures near 80° K and at equivalent pressure, but there has been no significant commercial interest in the use of these gases because of their combustible nature, even when diluted significantly with nitrogen and other noncombustible gases.

The flammability of hydrocarbon propellant compositions for aerosols has been considered in U.S. Patent 4 198 313 to Bargigia et al and the proposal has been made that halogenated organic compounds, such as $CBr F_3$ should be included in propellant mixtures in quantities between 40 and 70 percent by weight. However since the mixtures proposed are hydrocarbon propellants and not refrigerants, no consideration has been given to the suitability of the mixtures for use at cryogenic temperatures.

A substantial need remains for refrigerant systems which can be used to develop cryogenic temperatures with improved refrigerating capacity over nitrogen without forming a combustible or an explosive mixture. The present invention satisfies this need.

The present invention is directed to an improved refrigerant system which is particularly suitable for use in a refrigerating cycle utilizing Joule-Thomson expansion to generate cryogenic temperatures.

The present invention provides a noncombustible cryogenic refrigerant comprising a mixture of:

a) 20 – 70 percent by volume of at least one noncombustible gas selected from the group consisting of nitrogen, argon, and neon;

b) 40 – 80 percent by volume of a combustible gas comprising at least one low molecular weight hydrocarbon selected from the group consisting of methane, ethane and propane; and

c) at least 0.2 percent by volume of a bromofluoro methane flame retardant in an amount sufficient to render the gaseous mixture non-flammable and to enable the mixture to remain fluid without precipitation of solids therefrom at temperatures at or below the freezing point for the bromofluoro methane flame retardant during use in a cryogenic refrigeration system.

The refrigerant or working fluid in accordance with the invention is a mixture of a noncombustible refrigerant gas, such as nitrogen, argon, neon, and the like, a combustible gas comprising low molecular weight hydrocarbon gas, preferably saturated hydrocarbons, such as methane, ethane, and propane, and sufficient quantities of flame or combustion retardant to render the mixture essentially noncombustible under the conditions of use and handling. Unsaturated low molecular weight hydrocarbons may also be employed. Generally, the volume fraction of noncombustible gas, such as nitrogen, argon, neon, and the like, should range from about 20 to 60 percent and the hydrocarbons should range from about 40 to about 70 percent. The mixture also contains from about 0.2 to about 5 percent (by volume) of a flame or combustion retardant which does not precipitate or otherwise separate from the working fluid at the cryogenic temperatures to which the fluid is subjected. A particularly desirable flame and combustion retardant material is bromotrifluoro methane which is sold under the trademark Halon (1301) by DuPont. As used herein, all references to volume percent are measured at a standard temperature of 22°C (72°F) and a pressure of $1.013 \times 10^5$ N/m² (one atmosphere) unless otherwise noted.

It is believed that the flame retardant properties of bromotrifluoromethane are caused by the reaction of the bromotrifluoromethane with a transient or intermediate combustion product which is responsible for flame propagation to thereby prevent further combustion of the gaseous mixture. According to one theory, the bromotrifluoromethane breaks down during combustion to form a bromine free radical which reacts with hydrogen from the hydrocarbon to form HBr. The HBr in turn reacts with reactive hydroxyl radicals to form water and a bromine free radical which may again react with another hydrogen to thereby prevent the further combustion of the gaseous product. It has also been proposed that oxygen must be activated by free electrons before it will react with the hydrocarbon or other combustible products and that bromine, because of its large atomic size, is more apt to capture free electrons than is oxygen thereby reducing the availability of oxygen for combustion.

The aforesaid mixture of nitrogen, hydrocarbons and flame retardant has substantially improved refrigeration capacity, e.g., up to six times the refrigeration capacity of nitrogen. Moreover, the mixture has little or no propensity to burn when mixed with air at any concentration level.

There has been no evidence that the bromotrifluoromethane which has a freezing point of about 105°K precipitates at cyrogenic temperatures found in microminiature refrigeration systems.

Another aspect of the present invention provides a refrigerating method comprising:

generating a mixture of refrigerant gases at superatmospheric pressure comprising 20 – 70 percent by volume of at least one noncombustible gas selected from the group consisting of nitrogen, argon, and neon, 40 – 80 percent by volume of at least one low molecular weight hydrocarbon selected from the group consisting of methane, ethane, and propane, and at least 0.2 percent by volume of a bromofluoro methane flame retardant in an amount sufficient to render the gaseous mixture non-flammable and to enable the mixture to remain fluid without precipitation of solids therefrom at temperatures at or below the freezing point of the bromofluoro methane flame retardant; and

passing the pressurized mixture through a throttling means to provide Joule-Thomson expansion to the gaseous mixture thereby reducing the temperature thereof.

In a two-stage arrangement, a hydrocarbon-halon mixture may be in one closed system and nitrogen is in a second, totally separate closed system.

In order that the invention may more readily be understood, a description is now given, by way of example only, reference being made to the accompanying sole drawing which shows, schematically a refrigeration system of the present invention.

This invention is directed to an improved refrigerant which is particularly suitable for use in refrigeration systems utilizing Joule-Thomson expansion.

The refrigerant or working fluid of the invention comprises a mixture of noncombustible refrigerant gases, combustible refrigerant gases, and a combustion or flame retardant in sufficient quantities to be effective. The working fluid generally comprises a mixture of from about 20 to about 70 percent, preferably from about 30 to about 50 percent by volume, of at least one noncombustible gas selected from the group consisting of nitrogen, argon, and neon and from about 30 to about 80 percent, preferably about 40 to about 70 percent by volume of one or more low molecular weight hydrocarbons. The preferred low molecular weight hydrocarbons are methane, ethane, and propane in amounts of from 30 to 50 percent by volume methane, about 10 to 30 percent by volume ethane, and about 5 to 15 percent by volume propane.

The flame retardant is preferably bromo-trifluoromethane in amounts from about 0.2 to about 10 percent by volume, preferably about 0.75 to about 3 percent by volume, to effectively prevent combustion of the refrigerant mixture.

Generally, the hydrocarbon mixture and flame retardant bromotrifluoromethane are completely miscible with the noncombustible gas throughout the operating and handling temperatures and pressures.

The refrigerant mixture of the invention is readily employed in a wide variety of refrigeration systems. While it is particularly suitable for refrigerating systems employing Joule-Thomson expansion, the refrigerant may be used in refrigeration systems using other types of expansion.

The refrigeration systems shown in the drawing is suitable. As previously described, the gas mixture of nitrogen, hydrocarbons, and flame retardant are compressed to a suitable pressure in compressor 10. The compressibility of each of the gases is not the same, so the volume percent of the compressed gaseous mixture may not be the same at standard temperature and pressure. The compressed gases are directed through outlet valve 11 to heat exchanger 12 where the compressed mixture is cooled by the low temperature vapor from reservoir 13. The cooled compressed mixture is allowed to expand preferably adiabatically and irreversibly through expansion element 14, such as a throttling valve in conventionally sized refrigeration systems or an expansion capillary or a porous plug in a microminiature refrigeration system to provide Joule-Thomson expansion. Upon expanding into the reservoir 13, the temperature thereof is reduced in a desired manner. The vapor in reservoir 13 is directed to heat exchanger 12 to cool the incoming compressed gases as previously described and then preferably recycled through inlet valve 16 to compressor 10 for reuse in the system. The pressure of the compressed mixture prior to expansion can vary from about $3.45 \times 10^6$ to about $1.38 \times 10^7 N/M^2$ (500 to about 2000 psi) depending upon the amount of refrigeration and final temperature desired. The following examples are provided to further illustrate the invention.

EXAMPLE I

A cylinder of gas containing 30 volume percent nitrogen, 40 volume percent methane, 20 volume percent ethane, and 10 volume percent propane was pressurized to $1.103 \times 10^7 N/m^2$ (1600 psi) and connected to a microminiature refrigerator type IIT manufactured by the MMR Technologies, Inc. (Mountain View, CA) which is based on Joule-Thomson expansion and generally functions as the system shown in the drawing. The expansion element is a capillary. A Bunsen burner and a reignitor was connected to the refrigerator exhaust in order to determine the flammability of the exhausted gas mixture. The reignitor was designed to provide a high voltage spark 300 times per minute to ensure ignition should an inflammable gas be present in the exhaust. The gas mixture was passed through the heat exchanger and expansion capillary of the refrigerator to provide a temperature of about 89°K. The gas mixture exhausted from the refrigerator was readily ignited by the reignitor and generated a flame of about 15 cm (6 inches) in length.

EXAMPLE II

Additional nitrogen (20 percent by volume) was added to the gas mixture described in Example I and the mixture used as the refrigerant in the system described in Example I. The gas mixture exhausted from the refrigerator was readily ignited by the reignitor.

EXAMPLE III

A one liter stainless steel tank was filled with $CBrF_3$ to a pressure of $3.3 \times 10^5 N/m^2$ (48 psi). A hydrocarbon gas mixture described in Example I was added to the tank to a pressure of $9.45 \times 10^6 N/m^2$ (1370 psi). Nitrogen was added to the stainless steel tank to a total pressure of $1.18 \times 10^7 N/m^2$ (1710 psi). After equilibration of the gases, the tank was connected to the refrigeration system described in Example I and the gas mixture passed through the heat exchanger and expansion capillary. The refrigerator cooled to a temperature of about 85°K in about 2.5 minutes ($1.12 \times 10^7 N/m^2$ (1630 psi) tank pressure) and further to a temperature of 82.4°K ($4.83 \times 10^6 N/m^2$ (700 psi) tank pressure). The gas mixture exhausted from the microminiature refrigerator could not be ignited by the reignitor notwithstanding almost continuous sparking.

EXAMPLE IV

The mixture described in Example III was further diluted with additional nitrogen to a pressure of $1.18 \times 10^7 N/m^2$ (1710 psi). After equilibration, the gas was passed through the heat exchanger and expansion capillary of the microminiature refrigerator which cooled to a temperature of 82.3°K $1.055 \times 10^7 N/m^2$ (1530 psi) tank pressure. When the pressure reached $8.62 \times 10^6 N/m^2$ (1250 psi), neon was added to the gas mixture in the small stainless steel tank to raise the pressure thereof to $9.38 \times 10^6 N/m^2$ (1360 psi). The gas was then passed through the microminiature refrigerator which was further cooled to 81.7°K ($8.83 \times 10^6 N/m^2$ (1280 psi) tank pressure). No clogging of the expansion capillary of the microminiature refrigerator was evident. The reignitor failed to ignite exhausted gas therefrom. A diaphragm pump was then attached to the refrigerator exhaust line to further reduce the pressure to lower the temperature to 77°K, but again no clogging or other evidence of precipitation or separation of the $CBrF_3$ or other components including impurities was noted.

EXAMPLE V

To illustrate the increased refrigerating capacity of the nitrogen hydrocarbon mixture, tests were conducted on both nitrogen alone and a mixture of gases containing 42 volume percent nitrogen, 33 volume percent methane, 17 volume percent ethane and 8 volume percent propane. The test facilities were essentially the tank and microminiature refrigerator system disclosed in the previous examples. The refrigeration capacity was determined by measuring the average electrical power supplied to a heater located in the cold section of the microminiature refrigerator to maintain a prescribed temperature which was automatically controlled. Initially, nitrogen at $1.24 \times 10^7 N/m^2$ (1800 psi) was passed through the refrigerator system. The minimum temperature obtained was 80.8° K which was reached in 12 minutes. The temperature for the cold section was set for 100°K. The refrigeration capacity was determined to be 160 mW. A second test was run with a gas mixture comprising 30 volume percent nitrogen, 40 volume percent methane, 20 volume percent ethane, and 10 volume percent propane at $1.1 \times 10^7 N/m^2$ (1600 psi). A minimum temperature of 89.5°K was reached in 2 minutes. The refrigeration capacity was determined to be about 210 mW at 100°K and about 870 mW at 120°K. A third test was run with a gas mixture comprising 42 volume percent nitrogen, 33 volume percent methane, 17 volume percent ethane, and 8 volume percent propane at a starting tank pressure of $1.26 \times 10^7 N/m^2$ (1830 psi). A minimum temperature of 81.8°K was reached in about 3 minutes and a refrigeration capacity of 1.2 watts at 120°K and 500 mW at 90°K.

The Examples (I-IV) clearly show the effectiveness of bromotrifluoromethane in reducing the combustibility of the gaseous mixture containing hydrocarbons. The results shown in Example V clearly indicate the improved refrigeration capacity of the nitrogen-hydrocarbon mixture over nitrogen alone.

At nitrogen concentrations less than about 20 percent by volume, the system utilizing the gaseous mixture of nitrogen and hydrocarbons cannot produce temperatures less than about 100°K. At nitrogen concentrations about 70 percent by volume, there are essentially no differences in the refrigeration capacity between the nitrogen-hydrocarbon mixture and nitrogen alone.

The invention has been described herein primarily in terms of a mixture of nitrogen and hydrocarbon gases. However, it should be apparent that noncombustible gases, such as argon and neon alone or in combination with nitrogen or each other, can be employed. Additions of combustible materials other than those described herein may also be utilized to the extent such gases do not detrimentally effect the refrigeration process. Moreover, the refrigerant can be employed in refrigeration systems involving nonadiabatic expansion of gases.

## Claims

1. A noncombustible cryogenic refrigerant comprising a mixture of:
   a) 20 – 70 percent by volume of at least one noncombustible gas selected from the group consisting of nitrogen, argon, and neon;
   b) 40 – 80 percent by volume of a combustible gas comprising at least one low molecular weight hydrocarbon selected from the group consisting of methane, ethane and propane; and
   c) at least 0.2 percent by volume of a bromofluoro methane flame retardant in an amount sufficient to render the gaseous mixture non-flammable and to enable the mixture to remain fluid without precipitation of solids therefrom at temperatures at or below the freezing point for the bromofluoro methane flame retardant during the use in a cryogenic refrigeration system.

2. Refrigerant according to claim 1 wherein the noncombustible gas is nitrogen and the content thereof is from about 20 to 60 percent by volume at.

3. Refrigerant according to claim 1 or 2 wherein the hydrocarbon gas content is from about 40 to 70 percent by volume.

4. Refrigerant according to any one of claims 1 to 3 wherein the hydrocarbon gas includes a methane content from about 20 to about 50 volume percent.

5. Refrigerant according to any one of claims 1 to 4 wherein the hydrocarbon gas includes an ethane content from about 5 to 15 volume percent.

6. Refrigerant according to any one of claims 1 to 5 wherein the hydrocarbon gas includes a propane content from about 10 to about 30 volume percent.

7. Refrigerant according to any one claims 1 to 6 wherein the flame retardant is bromotrifluoromethane in amounts less than 10 volume percent.

8. Refrigerant according to any one of claims 1 to 7 wherein the bromotrifluoromethane content is less than 3 volume percent.

9. A refrigerating method comprising:
   a) generating a mixture of refrigerant gases as superatmospheric pressure comprising 20–70 percent by volume of at least one noncombustible gas selected from the group consisting of nitrogen, argon, and neon, 40–80 percent by volume of at least one low molecular weight hydrocarbon selected from the group consisting of methane, ethane, and propane, and at least 0.2 percent by volume of a bromofluoro methane flame retardant in an amount sufficient to render the gaseous mixture non-flammable and to enable the mixture to remain fluid without precipitation of solids therefrom at temperatures at or below the freezing point of the bromofluoro methane flame retardant; and
   b) passing the pressurized mixture through a throttling means to provide Joule-Thomson expansion to the gaseous mixture thereby reducing the temperature thereof.

10. A method according to claim 9 wherein the expanding mixture is recompressed for subsequent expansion reuse.

## Patentansprüche

1. Unentflammbares kryogenes Kühlmittel bestehend aus einer Mischung von
   a) 20 bis 70 Volumenprozent wenigstens eines unentflammbaren Gases, das aus der aus Stickstoff, Argon und Neon bestehenden Gruppe ausgewählt ist;
   b) 40 bis 80 Volumenprozent eines brennbaren Gases, das wenigstens einen Kohlenwasserstoff mit niedrigem Molekulargewicht umfaßt, der aus der aus Methan, Ethan und Propan bestehenden Gruppe ausgewählt ist; und
   c) wenigstens 0,2 Volumenprozent eines Bromfluormethan-Feuerhemmittels in einer ausreichenden Menge, um die Gasmischung unentflammbar zu machen und die Mischung während der Verwendung in einem kryogenen Kühlsystem ohne Ausfällung von Feststoffen daraus bei Temperaturen bei oder unterhalb des Gefrierpunktes des Bromfluormethan-Feuerhemmittels fließfähig zu halten.

2. Kühlmittel nach Anspruch 1, bei dem das unentflammbare Gas Stickstoff ist und dessen Gehalt zwischen etwa 20 bis 60 Volumenprozent beträgt.

3. Kühlmittel nach Anspruch 1 oder 2, bei dem der Kohlenwasserstoff-Gasgehalt zwischen etwa 40 bis 70 Volumenprozent beträgt.

4. Kühlmittel nach einem der Ansprüche 1 bis 3, bei dem das Kohlenwasserstoff-Gas einen Methangehalt zwischen etwa 20 bis etwa 50 Volumenprozent aufweist.

5. Kühlmittel nach einem der Ansprüche 1 bis 4, bei dem das Kohlenwasserstoff-Gas einen Ethangehalt zwischen etwa 5 bis 15 Volumenprozent aufweist.

6. Kühlmittel nach einem der Ansprüche 1 bis 5, bei dem das Kohlenwasserstoff-Gas einen Propangehalt zwischen etwa 10 bis etwa 30 Volumenprozent aufweist.

7. Kühlmittel nach einem der Ansprüche 1 bis 6, bei dem der feuerhemmende Stoff Bromtrifluormethan in Mengen kleiner als 10 Volumenprozent ist.

8. Kühlmittel nach einem der Ansprüche 1 bis 7, bei dem der Bromtrifluormethangehalt kleiner als 3 Volumenprozent ist.

9. Kühlverfahren umfassend:

a) Erzeugung einer Mischung eines Kühlgases bei überatmosphärischem Druck mit 20 bis 70 Volumenprozent wenigstens eines unentflammbaren Gases, das aus der aus Stickstoff, Argon und Neon bestehenden Gruppe ausgewählt ist, 40 bis 80 Volumenprozent wenigstens eines Kohlenwasserstoffs mit niedrigem Molekulargewicht, der aus der aus Methan, Ethan und Propan bestehenden Gruppe ausgewählt ist, und wenigstens 0,2 Volumenprozent eines Bromfluormethan-Feuerhemmittels in einer ausreichenden Menge, um die Gasmischung unentflammbar zu machen und die Mischung ohne Ausfällen von Feststoffen daraus bei Temperaturen bei oder unterhalb des Gefrierpunktes des Bromfluormethan-Feuerhemmittels fließfähig zu halten; und

b) Hindurchleiten der unter Druck stehenden Mischung durch Drosselmittel, um eine Joule-Thomson-Ausdehnung der Gasmischung zu erzeugen und dadurch deren Temperatur zu vermindern.

10. Verfahren nach Anspruch 9, bei dem die sich ausdehnende Mischung wieder komprimiert wird für eine anschließende erneute Ausdehnung.

**Revendications**

1. Réfrigérant cryogène non combustible comprenant un mélange de:

(a) de 20 à 70% en volume d'au moins un gaz non combustible choisi parmi l'azote, l'argon et le néon;

(b) de 40 à 80% en volume d'un gaz combustible comprenant au moins un hydrocarbure de basse masse moleculaire choisi parmi le méthane, l'éthane et le propane; et

(c) au moins 0,2% en volume d'un bromofluorométhane, retardateur d'inflammation, en une quantité suffisante pour rendre le mélange gazeux non inflammable et pour permettre à ce mélange de rester fluide sans précipitation de solides à des températures égales ou inférieures au point de congélation du retardateur d'inflammation bromofluorométhane pendant utilisation dans un système de réfrigération cryogène.

2. Réfrigérant selon la revendication 1, dans lequel le gaz non combustible est l'azote et sa teneur est d'environ 20 à 60% en volume.

3. Réfrigérant selon la revendication 1 ou 2, dans lequel la teneur en hydrocarbure gazeux est d'environ 40 à 70% en volume.

4. Réfrigérant selon l'une quelconque des revendications 1 à 3, dans lequel l'hydrocarbure gazeux contient du méthane à raison d'environ 20 à 50% en volume.

5. Réfrigérant selon l'une quelconque des revendications 1 à 4, dans lequel l'hydrocarbure gazeux contient de l'éthane à raison d'environ 5 à 15% en volume.

6. Réfrigérant selon l'une quelconque des revendications 1 à 5, dans lequel l'hydrocarbure gazeux contient du propane à raison d'environ 10 à 30% en volume.

7. Réfrigérant selon l'une quelconque des revendications 1 à 6, dans lequel le retardateur d'inflammation est le bromotrifluorométhane en une proportion inférieure à 10% en volume.

8. Réfrigérant selon l'une quelconque des revendications 1 à 7, dans lequel la teneur en bromotrifluorométhane est inférieure à 3% en volume.

9. Procédé de réfrigération qui consiste:

(a) à engendrer un mélange de gaz refrigérants sous une pression supérieure à l'atmosphérique, comprenant de 20 à 70% en volume d'au moins un gaz non combustible choisi parmi l'azote, l'argon et le néon, de 40 à 80% en volume d'au moins un hydrocarbure de basse masse moléculaire choisi parmi le méthane, l'éthane et le propane, et au moins 0,2% en volume de bromofluorométhane, retardateur d'inflammation, en un quantité suffisante pour rendre le mélange gazeux non inflammable et pour permettre à ce mélange de rester fluide sans précipitation de solides à des températures égales ou inférieures au point de congélation du bromofluorométhane retardateur d'inflammation; et

(b) à faire passer le mélange pressurisé a travers un dispositif d'étranglement pour provoquer la détente Joule-Thomson au mélange gazeux pour en réduire ainsi la température.

10. Procédé selon la revendication 9, dans lequel on comprime de nouveau le mélange en détente en vue d'une réutilisation ultérieure pour la détente.